# EUROPÄISCHE PATENTSCHRIFT

(11) **EP 0 614 026 B1**
(45) Veröffentlichungstag und Bekanntmachung des Hinweises auf die Patenterteilung: **06.03.1996**
(21) Anmeldenummer: 93119761.0
(22) Anmeldetag: 08.12.1993
(51) Int. Cl.: F16D 69/02

(54) **Reibbelag**
Friction lining
Garniture de friction

(30) Priorität: 04.03.1993 DE 4306721
(43) Veröffentlichungstag der Anmeldung: 07.09.1994
(73) Patentinhaber: RÜTGERS PAGID AKTIENGESELLSCHAFT, D-45356 Essen (DE)
(72) Erfinder: De Soccio, Vittorio, Dr., Benevento (IT); Koch, Wilfried, D-51467 Bergisch-Gladbach (DE); Bugaj, DI Richard, D-46244 Bottrop (DE)
(74) Vertreter: Hosbach, Hans Ulrich

(56) Entgegenhaltungen:
- EP-A- 0 055 205
- EP-A- 0 093 673
- EP-A- 0 144 464
- EP-A- 0 181 616
- EP-A- 0 557 605

## Beschreibung

Die Erfindung betrifft einen nicht organisch gebundenen Reibbelag auf der Basis von Metallpulvern und ein Verfahren zu seiner Herstellung.

Beläge der vorstehenden Art sind an sich bekannt. Sie werden vor allem in Scheibenbremsen bei Eisenbahnen eingesetzt. Sie bestehen aus einer stählernen Trägerplatte, auf der säulenförmige Reibelemente ggf. unter Verwendung federnder Elemente aufgesetzt sind. Die Reibelemente können mit einer metallischen Teilumhüllung versehen sein, bei der zumindest die äußere Reibfläche unbedeckt bleibt. Die Reibmasse besteht häufig aus Eisen, dem Kupfer und ggf. dessen Legierungskomponenten, wie Zinn oder Zink zugesetzt werden können. Die Reibmasse kann außerdem Schmiermittel, wie Graphit, Molybdändisulfid oder Blei und Reibstützer, wie Chromkarbid, Ferrochrom und Titankarbid oder Keramikpartikel aus Metalloxiden, bzw. SiO₂ enthalten. Diese Reibmassen werden kalt zu Grünkörpern gepreßt, die in der Regel unter Druck zu Reibelementen gesintert werden. Es ist auch vorgeschlagen worden, den Sinterprozeß drucklos durchzuführen und die Elemente ggf. anschließend nachzuverdichten (kalibrieren). Dadurch wird das Verfahren wesentlich vereinfacht. Bei einem anderen Verfahren wird der Grünkörper von Strom durchflossen, wobei die Partikel an ihren Berührungsstellen erhitzt werden und miteinander verschweißen. Das Verfahren hat sich aber nicht durchgesetzt.

Der drucklose Sinterprozeß ist heute allgemein üblich. Je nach Zusammensetzung der Reibmassen wird bei Temperaturen zwischen 500 und 1 200 °C gesintert. Bei Reibmassen auf der Basis von Eisen und Chrom sind Temperaturbereiche zwischen 1 000 und 1 200 °C üblich. Für Reibmassen auf der Basis von Kupfer reichen Temperaturen von 700 bis 900 °C aus, die durch den Zusatz von Zinn noch um etwa 100 °C vermindert werden können. Die Aufheizzeit ist von der Größe des Reibelements abhängig. Sie muß aber in jedem Fall ausreichen, die gewünschte Temperatur auch im Inneren des Elements zu erreichen. Die hohen Temperaturen gestalten den Sinterprozeß jedoch sehr energieaufwendig. Die Strahlungsverluste der Öfen sind erheblich, so daß nur ein geringer Teil der eingesetzten Energie, z. B. durch Abhitzekessel oder Vorwärmung der Verbrennungsluft, bzw. der Brenngase zurückgewonnen werden kann. Hinzu kommt der Ausstoß an schadstoffhaltigem Rauchgas.

Es bestand daher die Aufgabe, Reibelemente für Reibbeläge aus nicht organisch gebundenen Metallpulvern mit ausreichenden Festigkeits- und Reibeigenschaften und ein Verfahren zu ihrer Herstellung zu entwickeln, bei dem der Energieverbrauch minimiert ist.

Die Aufgabe wird erfindungsgemäß durch Reibelemente gelöst, die aus einer ungesinterten Reibmasse aus
30 bis 50 Vol.-% Eisenpulver
5 bis 45 Vol.-% Kohlenstoffpartikel
20 bis 35 Vol.-% Kupfer und/oder Kupferlegierung, vorzugsweise Späne
0 bis 10 Vol.-% Reibstützer und
0 bis 10 Vol.-% feste Schmiermittel
bestehen, wobei zumindest die Mantelfläche der Reibelemente mit Kupfer oder einer Kupferlegierung umhüllt ist.

Als Kupferlegierung können Legierungen mit Zink, Zinn oder/und Phosphor in der Reibmasse verwendet werden. Die Kohlenstoffpartikel bestehen, vorzugsweise aus einem Gemisch von Flockengraphit, synthetischem Graphit und Koksgrus oder Ruß. Reibstützer nach der Erfindung sind beispielsweise hochkohlenstoffhaltiges Chrom, Chromkarbid, Ferrochrom, Titankarbid, Siliciumdioxid und Metalloxide. Als festes Schmiermittel wird insbesondere das unbedenkliche Molybdänsulfid verwendet, um den Einsatz des Schwermetalls Blei zu vermeiden.

Die Komponenten werden homogen gemischt und in die in die Form eingelegten Ringe oder tiefgezogenen Näpfchen aus kupferhaltigem Material, insbesondere aus Kupfer oder Messing, eingefüllt. Die Reibmasse wird ohne Erhitzung unter einem Druck von 25 bis 50 kN/cm verdichtet. Auch eine thermische Nachbehandlung ist nicht erforderlich. Erwärmungen bis auf Temperaturen unterhalb der Sintertemperatur sind möglich und haben auf die Struktur und auf die Festigkeits- und Reibeigenschaften kaum einen Einfluß. Sie gestalten den Herstellungsprozeß aufwendiger und erhöhen den Energieverbrauch, ohne die Eigenschaften der erfindungsgemäßen Reibelemente deutlich zu verbessern.

Die Zusammensetzung der Reibmasse ist dabei von ausschlaggebender Bedeutung für die Eigenschaften der Reibelemente. In früheren Versuchen mit einer überwiegend aus Eisenpulver bestehenden Reibmasse war die Festigkeit von ungesinterten Reibelementen unzureichend und ihr Abrieb viel zu hoch. Daher wurde diese Entwicklung nicht weiter verfolgt. Um so überraschender war es, daß Reibbeläge mit ungesinterten Reibelementen gemäß der Erfindung einen deutlich niedrigeren Verschleiß aufwiesen, bei Geschwindigkeiten bis 250 km/h keinerlei Schäden zeigten und in ihren mittleren Reibungskoeffizienten bei Trocken- und Naßbremsungen wesentlich geringer Streubreiten hatten, als solche mit vergleichbaren, auf dem Markt erhältlichen Sinterelementen oder Sinterelementen gleicher Zusammensetzung wie bei der Erfindung.

Da der Verschleiß geringer als von Kupfer oder Messing ist, bilden sich an den Ummantelungen auch keine störenden Drehspäne.

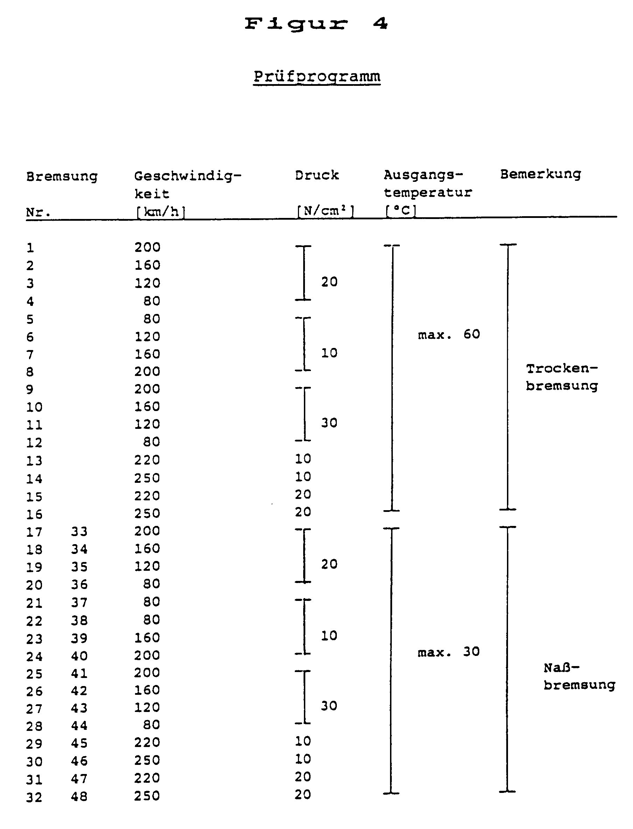

Die Erfindung wird anhand des nachfolgenden Beispiels näher erläutert, wobei die Untersuchungsergebnisse an dem erfindungsgemäßen Belag denen an Sinterbelägen gleicher Zusammensetzung und an auf dem Markt erhältlichen Sinterbelägen auf Kupferbasis gegenübergestellt werden. Die Untersuchungen wurden in Anlehnung an die UIC-Prüfvorschrift 541-3 VE nach dem aus Figur 4 ersichtlichen Prüfprogramm.

Im Beispiel 1 wird ein Gemisch aus
43 Vol.-% Eisenpulver
25 Vol.-% Kohlenstoff
22 Vol.-% Bronze
5 Vol.-% hochkohlenstoffhaltiges Chrom und
5 Vol.-% Molybdändisulfid
in zylindrische Näpfchen aus tiefgezogenem Kupferblech mit einer inneren Querschnittsfläche von 8 cm gefüllt und ohne Erwärmung bis auf einen Druck von 37 kN/cm verdichtet. Je 15 der so erhaltenen Reibelemente werden gleichmäßig auf ein Stahlträgerblech aufgelötet, das in seinen Abmessungen dem Bremsbelag der Anlage 1 a der UIC-Prüfvorschrift mit einer Reibfläche von 120 cm entspricht. Je zwei spiegelbildliche Anordnungen werden auf dem Prüfstand zu einem Bremsbelag zusammengefügt. Der Bremsbelag wird anschließend auf einem Bremsprüfstand nach den UIC-Prüfvorschriften getestet. Auf jeder Seite der Bremsscheibe befindet sich ein Bremsbelag.

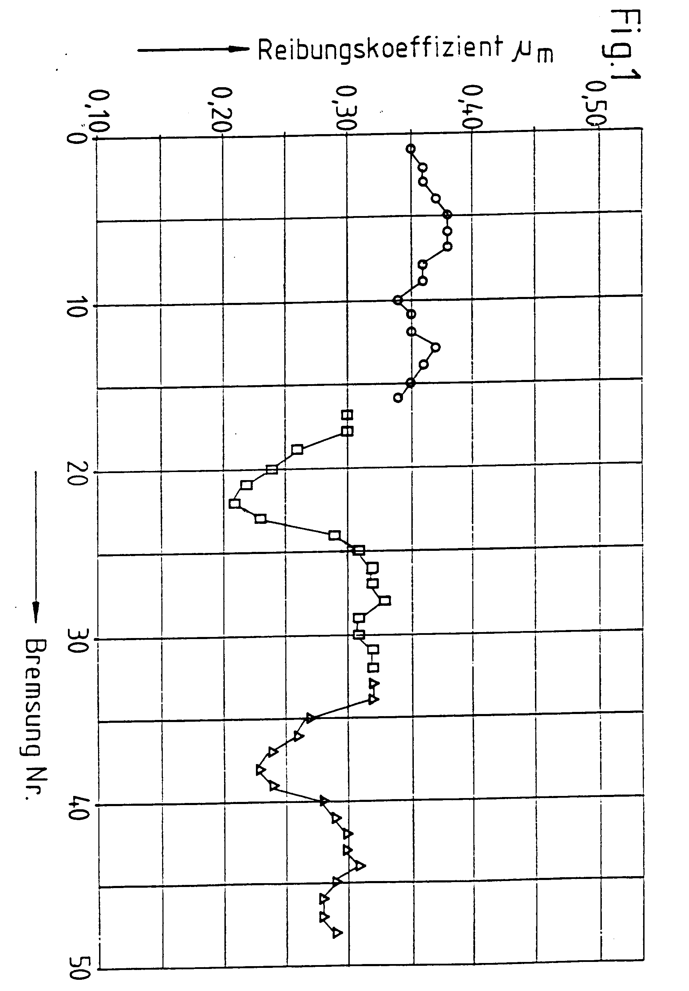

Die mittleren Reibungskoeffizienten sind in Figur 1 dargestellt in Abhängigkeit von der Fahrgeschwindigkeit und dem Anpreßdruck. Das Fahrprogramm besteht aus drei Zyklen:
1. Zyklus (-o-): Trockenbremsung
2. Zyklus (-□-): 1. Durchgang der Naßbremsung
3. Zyklus (-Δ-): 2. Durchgang der Naßbremsung

Am Ende des Prüfprogramms wird der Abrieb bestimmt. Er beträgt 15 g zusammen für beide Bremsbeläge.

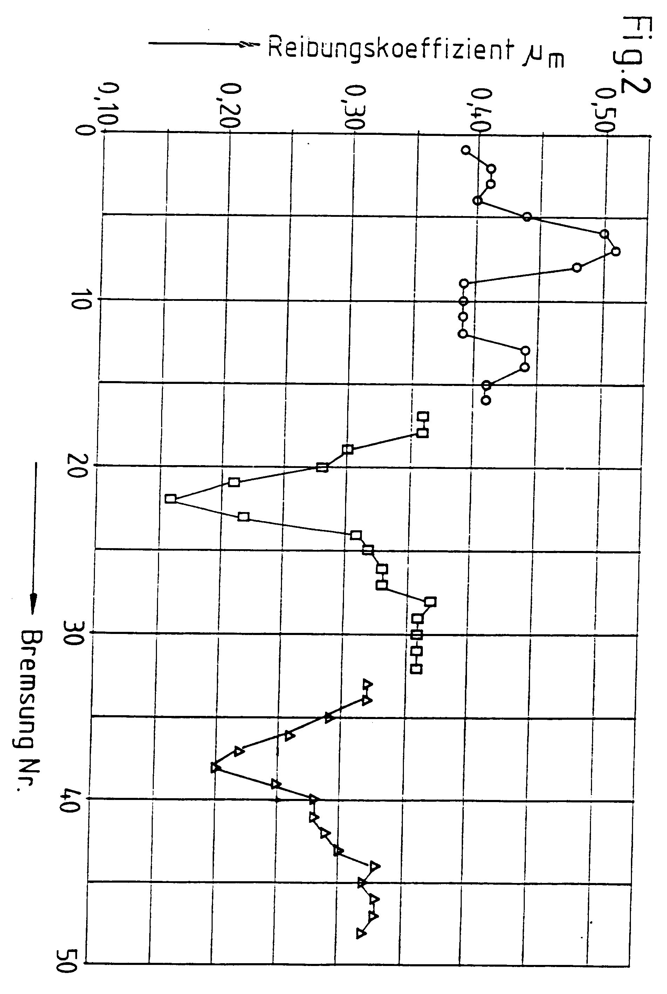

Im Beispiel 2 (Vergleich) werden kalt verdichtete Reibelemente entsprechend dem Beispiel 1 hergestellt und bei 750 °C 15 Minuten gesintert. Wie im Beispiel 1 werden damit Bremsbeläge hergestellt, die ebenfalls geprüft werden. Die mittleren Reibungskoeffizienten sind in Figur 2 dargestellt. Der Abrieb beträgt 23 g.

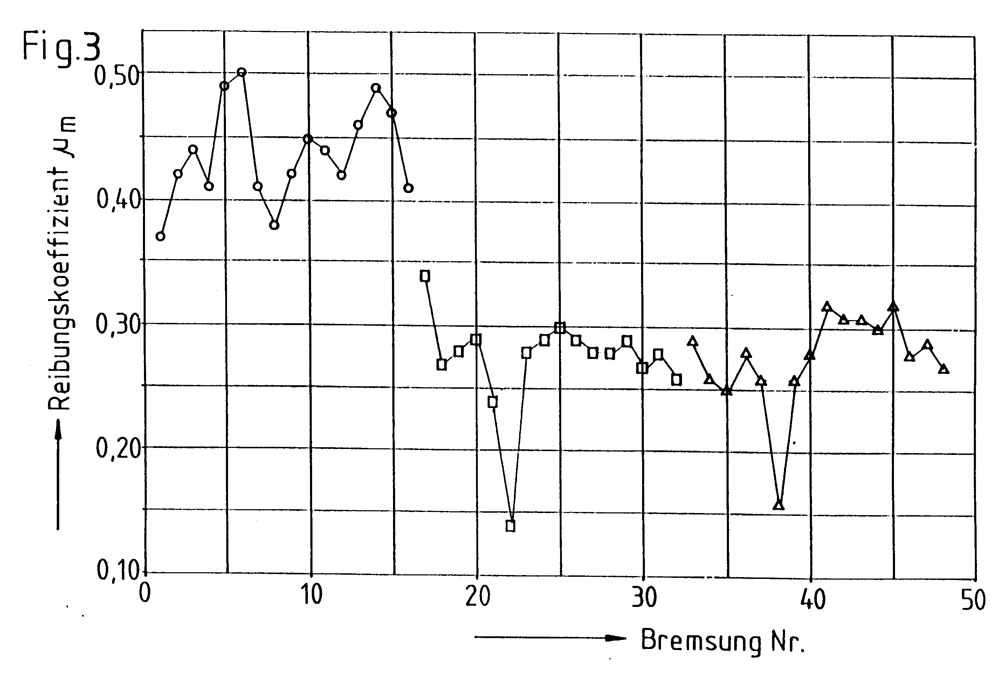

Als Beispiel 3 (Vergleich) werden vergleichbare marktübliche Bremsbeläge mit Sinterelementen auf Kupferbasis getestet und die mittleren Reibungskoeffizienten in Figur 3 dargestellt. Der Abrieb beträgt 34 g.

Der Abrieb bei dem auf dem Markt erhältlichen Belag ist am größten. Er ist mehr als doppelt so hoch wie bei dem erfindungsgemäßen Belag.

Ein Vergleich der Beispiele 1 und 2 zeigt, daß durch das Sintern der Abrieb um mehr als 50 % ansteigt.

Die Beläge der Vergleichsbeispiele 2 und 3 unterscheiden sich in der Streubreite der mittleren Reibungskoeffizienten nur wenig. Die Reibungskoeffizienten der Trockenreibung liegen in beiden Fällen auf sehr hohem Niveau. Bei der Naßreibung ist der Abfall im Beispiel 2 jedoch geringer. Bei den erfindungsgemäßen Belägen ist die Schwankungsbreite der Reibwerte deutlich geringer. Die Reibungskoeffizienten bei der Trockenreibung sind, wie erwünscht, niedriger und der Reibwertabfall bei den Naßbremsungen ist ebenfalls wesentlicher geringer als bei den Vergleichsbeispielen.

Es ist zwar aus anderen Untersuchungen bekannt, daß poröse Beläge bei Nässe ein besseres Reibverhalten zeigen. Daraus ließe sich u. U. das günstigere Nässeverhalten der Reibbeläge des Beispiels 1 gegenüber dem der gesinterten Beläge identischer Zusammensetzung (Beispiel 2) erklären, obwohl die Dichteunterschiede nur gering sind, da drucklos gesintert wurde und keine Nachverdichtung erfolgte.

Überraschend sind aber das ausgezeichnete Trockenreibverhalten mit nur geringen Druck- und Geschwindigkeitseinflüssen und der stark verminderte Abrieb.

Neben der vereinfachten Herstellungsweise und der Energieeinsparung sind die verbesserten Produkteigenschaften ein weiterer Vorteil der erfindungsgemäßen Reibbeläge.

## Patentansprüche

1. Reibbelag aus einer stählernen Trägerplatte, auf die säulenförmige Reibelemente aus nicht organisch gebundenem Reibmaterial auf der Basis von Metallpulvern ggf. unter Verwendung federnder Elemente aufgesetzt sind, **dadurch gekennzeichnet**, daß die Reibelemente aus einer ungesinterten Reibmasse aus
30 bis 50 Vol.-% Eisenpulver
5 bis 45 Vol.-% Kohlenstoffpartikel
20 bis 35 Vol.-% Kupfer und/oder Kupferlegierung, vorzugsweise Späne
0 bis 10 Vol.-% Reibstützer und
0 bis 10 Vol.-% feste Schmiermittel
bestehen, und zumindest die Mantelfläche der Reibelemente mit Kupfer oder einer Kupferlegierung umhüllt ist.

2. Reibbelag nach Anspruch 1, **dadurch gekennzeichnet**, daß die Reibmasse Kupferlegierungen mit Zink, Zinn oder/und Phosphor enthält.

3. Reibbelag nach Anspruch 1 oder 2, **dadurch gekennzeichnet**, daß die Reibmasse als Reibstützer hochkohlenstoffhaltiges Chrom, Chromkarbid oder/und Ferrochrom enthält.

4. Reibbelag nach einem der Ansprüche 1 bis 3, **dadurch gekennzeichnet**, daß die Reibmasse Molybdändisulfid als Schmiermittel enthält.

5. Verfahren zur Herstellung eines Reibbelags durch Befestigen von säulenförmigen Reibelementen aus nicht organisch gebundenem Reibmaterial auf der Basis von Metallpulver auf einer stählernen Trägerplatte, **dadurch gekennzeichnet**, daß die Reibmasse aus
30 bis 50 Vol.-% Eisen
5 bis 45 Vol.-% Kohlenstoff
20 bis 35 Vol.-% Kupfer und/oder Kupferverbindungen
0 bis 10 Vol.-% Reibstützer und
0 bis 10 Vol.-% feste Schmiermittel
in an sich bekannter Weise in eine Form gefüllt und ohne Erhitzen bei einem Druck von 25 bis 50 kN/cm zu Reibelementen gepreßt wird, die ggf. nach Erwärmen bis auf eine Temperatur unterhalb der Sintertemperatur mit der Trägerplatte in üblicher Weise verbunden werden.

6. Verfahren nach Anspruch 5, **dadurch gekennzeichnet**, daß die Reibmasse in zylindrische Näpfchen aus kupferhaltigem Material eingefüllt und anschließend verpreßt wird.

## Claims

1. Friction lining comprising a steel support plate on which pillar-shaped friction elements of non-organically bonded friction material based on metal powders are positioned, optionally with the use of resilient elements, characterised in that the friction elements comprise an unsintered friction composition of
30 to 50 vol.% Iron powder
5 to 45 vol.% Carbon particles
20 to 35 vol.% Copper and/or Copper alloy, preferably chips
0 to 10 vol.% Friction promoters and
0 to 10 vol.% Solid lubricant
and at least the side surface of the friction elements is enveloped with copper or a copper alloy.

2. Friction lining as claimed in Claim 1, characterised in that the friction composition contains copper alloys with zinc, tin and/or phosphorous.

3. Friction lining as claimed in Claim 1 or 2, characterised in that the friction composition contains high carbon-containing chromium, chromium carbide and/or ferrochrome as the friction promoter.

4. Friction lining as claimed in one of Claims 1 to 3, characterised in that the friction composition contains molybdenum disulphide as the lubricant.

5. Method of manufacturing a friction lining by fastening pillar-shaped friction elements of non-organically bonded friction material based on metal powder to a steel support plate, characterised in that the friction composition comprising
30 to 50 vol.% Iron
5 to 45 vol.% Carbon
20 to 35 vol.% Copper and/or Copper compounds
0 to 10 vol.% Friction promoter and
0 to 10 vol.% Solid lubricant
is introduced in a manner known per se into a mould and pressed without heating at a pressure of 25 to 50 kN/cm into friction elements which, optionally after heating up to a temperature below the sintering temperature, are connected to the support plate in the conventional manner.

6. Method as claimed in Claim 5, characterised in that the friction composition is introduced into cylindrical blanks of copper-containing material and subsequently pressed.

## Revendications

1. Garniture de frottement constituée d'une plaque support en acier, sur laquelle sont appliqués des éléments de frottement en forme de colonne, en matériau de frottement non lié organiquement, à base de poudre métallique éventuellement avec utilisation d'éléments formant ressort, caractérisée par le fait que les éléments de frottement sont constitués d'une masse de frottement non frittée composée de :
30 à 50 % en volume de poudre de fer
5 à 45 % en volume de particules de carbone
20 à 35 % en volume de cuivre et/ou d'alliage à base de cuivre, de préférence de limaille
0 à 10 % en volume de support de frottement et
0 à 10 % en volume de milieu lubrifiant solide
et au moins la surface latérale des éléments de frottement est revêtue de cuivre ou d'un alliage à base de cuivre.

2. Garniture de frottement selon la revendication 1, caractérisée par le fait que la masse de frottement contient un alliage à base de cuivre comportant du zinc, de l'étain et/ou du phosphore.

3. Garniture de frottement selon l'une des revendications 1 ou 2, caractérisée par le fait que la masse de frottement contient en tant que support de frottement, du chrome, carbure de chrome et/ou ferrochrome à haute teneur en carbone.

4. Garniture de frottement selon l'une des revendications 1 à 3, caractérisée par le fait que la masse de frottement contient du disulfure de molybdène en tant que milieu lubrifiant.

5. Procédé de préparation d'une garniture de frottement par fixation d'éléments de frottement en forme de colonne, en matériau de frottement non lié organiquement, à base de poudre métallique sur une plaque support en acier, caractérisé par le fait que la masse de frottement, constituée de
30 à 50 % en volume de poudre de fer
5 à 45 % en volume de particules de carbone
20 à 35 % en volume de cuivre et/ou d'alliage à base de cuivre, de préférence de limaille
0 à 10 % en volume de support de frottement et
0 à 10 % en volume de milieu lubrifiant solide
est introduite, de façon connue, dans un moule et pressée sans chauffage à une pression de 25 à 50 kN/cm, pour former des éléments de frottement, qui, éventuellement après chauffage à une température inférieure à la température de frittage, sont liés, de façon connue, à la plaque support.

6. Procédé de préparation selon la revendication 5, caractérisé par le fait que la masse de frottement est introduite dans des godets cylindriques en matériau comportant du cuivre et ensuite pressée.
